# EUROPÄISCHE PATENTSCHRIFT

(11) **EP 1 914 954 B1**
(45) Veröffentlichungstag und Bekanntmachung des Hinweises auf die Patenterteilung: **12.02.2020**
(21) Anmeldenummer: 06122426.7
(22) Anmeldetag: 17.10.2006
(51) Int. Cl.: H04L 29/06, H04L 29/08, H04L 12/28, H04L 29/12

(54) **VERFAHREN UND SYSTEM ZUR ÜBERTRAGUNG VON DATENPAKETEN**
METHOD AND SYSTEM FOR TRANSMITTING DATA PACKETS
PROCÉDÉ ET SYSTÈME POUR LA TRANSMISSION DE PAQUETS DE DONNÉES

(43) Veröffentlichungstag der Anmeldung: 23.04.2008
(73) Patentinhaber: Swisscom AG, 3050 Bern (CH)
(72) Erfinder: Danzeisen, Marc, 3063 Ittigen (CH); Heissenbüttel, Marc, 3011 Bern (CH); Linder, Jan, 3013 Bern (CH); Aeschlimann, Felix, 3114 Wichtrach (CH)
(74) Vertreter: BOVARD AG

(56) Entgegenhaltungen:
- US-A1- 2002 094 829
- US-A1- 2004 185 777
- CHAN-WAH NG ET AL: "Multiple access interfaces for mobile nodes and networks" NETWORKS, 2004. (ICON 2004). PROCEEDINGS. 12TH IEEE INTERNATIONAL CONFERENCE ON SINGAPORE 16-19 NOV. 2004, PISCATAWAY, NJ, USA,IEEE, US, Bd. 2, 16. November 2004 (2004-11-16), Seiten 774-779, XP010777406 ISBN: 0-7803-8783-X
- PERERA E ET AL: "OptiNets: an architecture to enable optimal routing for network mobility" 2004 INTERNATIONAL WORKSHOP ON WIRELESS AD-HOC NETWORKS (IEEE CAT. NO. 05EX789) IEEE PISCATAWAY, NJ, USA, 2004, Seiten 68-72, XP002416275 ISBN: 0-7803-8275-7
- ERNST, THIERRY; CHARBON, JULIEN: "Multihoming with NEMO Basic Support" PROCEEDINGS OF THE FIRST INTERNATIONAL CONFERENCE ON MOBILE COMPUTING AND UBIQUITOUS NETWORKING (ICMU 2004), YOKOSUKA, JAPAN, 8. Januar 2004 (2004-01-08), Seiten 1-6, XP008074123
- ROUHANA N ET AL: "BWIG: bluetooth web internet gateway", COMPUTERS AND COMMUNICATIONS, 2002. PROCEEDINGS. ISCC 2002. SEVENTH IN TERNATIONAL SYMPOSIUM ON JULY 1-4, 2002, PISCATAWAY, NJ, USA,IEEE, 1 July 2002 (2002-07-01), pages 679-684, XP010595833, ISBN: 978-0-7695-1671-4
- BRAY J ET AL: "BLUETOOTH 1.1: Connect Without Cables; THE LINK CONTROLLER", 1 January 2001 (2001-01-01), BLUETOOTH CONNECT WITHOUT CABLES, XX, XX, PAGE(S) 65 - 87,275, XP002288291,

## Beschreibung

### Technisches Gebiet

Die vorliegende Erfindung bezieht sich auf ein Verfahren und ein System zur Übertragung von Datenpaketen. Insbesondere betrifft die Erfindung ein Verfahren und System, bei welchem auf mindestens einer ersten drahtlosen Netzwerkschnittstelle eines ersten Kommunikationsknotens mindestens eine erste IP-Adresse für eine drahtlose bidirektionale Übertragung von Datenpaketen zwischen dem ersten Kommunikationsknoten und einem IP-basierten Netzwerk konfiguriert wird.

### Stand der Technik

Elektronische Geräte wie beispielsweise mobile Telefone, PDAs (PDA: Personal Digital Assistant), Computer, Spielkonsolen, Armbanduhren oder Navigationsgeräte erfahren eine immer grössere Verbreitung. Mittels Netzwerkschnittstellen, welche an einem elektronischen Gerät angebracht sind, können zwischen dem elektronischen Gerät und einem Kommunikationsnetzwerk Kommunikationsverbindungen erstellt werden. So kann beispielsweise ein Computer, ein Notebook, ein Festnetztelefon, ein mobiles Telefon, eine Spielkonsole oder irgendein anderes elektronisches Gerät, Netzwerkschnittstellen zur Verbindung mit einem festnetzbasierten oder mit einem mobilen Kommunikationsnetzwerk aufweisen. Solche Netzwerkschnittstellen umfassen insbesondere Netzwerkschnittstellen zur Verbindung des elektronischen Geräts mit einem POTS (POTS: Plain Old Telefon System) Netzwerk, mit einem Ethernet Netzwerk, mit einem GSM (GSM: Global System for Mobile Communications) Netzwerk, mit einem WLAN (WLAN: Wireless Local Area Network) Netzwerk oder mit irgendeinem anderen Netzwerk. Mittels einer solchen Netzwerkschnittstelle können über ein entsprechendes Kommunikationsnetzwerk Daten zwischen dem elektronischen Gerät und weiteren Geräten ausgetauscht werden. Insbesondere kann mittels solcher Netzwerkschnittstellen eine Kommunikationsverbindung zwischen dem elektronischen Gerät und einem IP-basierten Netzwerk (IP: Internet Protocol) erstellt werden. Beispielsweise kann mit einem Notebook mittels einer WLAN Netzwerkschnittstelle die Verfügbarkeit von E-Mail Nachrichten auf einem E-Mail Server überprüft werden. Oder es kann mittels einer Spielkonsole ein Spielzug an eine entfernte Spielkonsole übermittelt werden. Oder es kann die Uhr eines Computers mit der Uhr eines Zeit-Servers synchronisiert werden.

Elektronische Geräte können aber auch Netzwerkschnittstellen zur Erstellung von drahtlosen lokalen Kommunikationsverbindungen aufweisen. So kann beispielsweise an einem PDA (PDA: Personal Digital Assistant) eine IrDA (Infrared Data Association) Schnittstelle oder eine Bluetooth Schnittstelle zur Erstellung einer drahtlosen lokalen Kommunikationsverbindung angebracht sein. Eine solche drahtlose Netzwerkschnittstelle eines PDAs ist beispielsweise dazu geeignet, um eine drahtlose lokale Kommunikationsverbindung zu einem festinstallierten Computer oder zu einem Notebook aufzubauen. Über eine solche drahtlose lokale Kommunikationsverbindung können Daten zwischen dem PDA und dem Notebook synchronisiert werden. So können zwischen dem PDA und dem Notebook beispielsweise E-Mail Nachrichten zwischen E-Mail Applikationen des PDAs und des Notebooks synchronisiert werden. Selbstverständlich können so auch Daten weiterer Applikationen, wie beispielsweise eines Kalenders oder eines Adressbuchs, zwischen entsprechenden Applikationen des PDAs und des Notebooks synchronisiert werden.

Ein Nachteil der im Stand der Technik verwendeten Verfahren ist es, dass die an einem elektronischen Gerät angebrachte Netzwerkschnittstelle zur Kommunikation mit einem Kommunikationsnetzwerk einerseits einen hohen Energiebedarf aufweist und andererseits ein grosses Gerätevolumen beansprucht. Diese Nachteile werden mit einer Netzwerkschnittstelle zur Erstellung einer lokalen Kommunikationsverbindung behoben. Allerdings können mit einer Netzwerkschnittstelle zur Erstellung einer lokalen Kommunikationsverbindung nur Kommunikationsverbindungen zu Geräten erstellt werden, welche im unmittelbaren Wirkungsbereich einer solchen Netzwerkschnittstelle sind. Eine Kommunikation über übliche Kommunikationsnetzwerke wie beispielsweise ein WLAN Netzwerk, ein GSM Netzwerk oder ein UMTS Netzwerk ist mit einer solchen Netzwerkschnittstelle zur Erstellung einer lokalen Kommunikationsverbindung nicht möglich.

Ein anderer Nachteil des Standes der Technik ergibt sich aus der starken Verbreitung von elektronischen Geräten. So verfügen Benutzer oft über mehrere elektronische Geräte, wie beispielsweise über ein erstes elektronisches Gerät mit einer WLAN Netzwerkschnittstelle, wie z.B. einen PDA, und über ein zweites elektronisches Gerät mit einer GSM Netzwerkschnittstelle, wie z.B. ein mobiles Telefon. Mit dem zweiten elektronischen Gerät mit der GSM Netzwerkschnittstelle kann ein Benutzer an einem Standort, an welchem sowohl ein WLAN Netzwerk und einem GSM Netzwerk verfügbar wäre, nur gerade das GSM Netzwerk nutzen. Falls jedoch der Benutzer beispielsweise eine grosse Datei, wie z.B. eine Videodatei, auf das zweite elektronische Gerät übertragen möchte, kann der Benutzer von dem schnelleren WLAN Netzwerk nicht Gebrauch machen, obwohl ein solches Netzwerk am aktuellen Standort des Benutzers verfügbar wäre.

Ein weiterer Nachteil des Standes der Technik ist es, dass ein Benutzer welcher über mehrere elektronische Geräte verfügt, also wie eben beschrieben über ein erstes elektronisches Gerät mit einer WLAN Netzwerkschnittstelle und über ein zweites elektronisches Gerät mit einer GSM Netzwerkschnittstelle, bei einem Standortwechsel für gewisse der elektronischen Geräte den Zugriff auf ein Netzwerk verlieren kann. Falls sich der Benutzer beispielsweise aus dem Wirkungsbereich eines WLAN Hotspots hinausbewegt, kann der Benutzer die Möglichkeit für einen Netzwerkzugriff für das erste elektronische Gerät mit der WLAN Netzwerkschnittstelle vollkommen verlieren. Dies obwohl am aktuellen Standort des Benutzers immer noch ein, zwar langsameres, GSM Netzwerk verfügbar wäre.

In der Publikation CHAN-WAH NG ET AL: "Multiple access interfaces for mobile nodes and networks" NETWORKS, 2004. (ICON 2004). PROCEEDINGS. 12TH IEEE INTERNATIONAL CONFERENCE ON SINGAPORE 16-19 NOV. 2004, PISCATAWAY, NJ, USA, IEEE, US, Bd. 2, 16. November 2004, Seiten 774-779, ISBN: 0-7803-8783-X, werden mobile Geräte und mobile Netzwerke mit mehreren Netzwerkschnittstellen beschrieben. Mit dem aus dem Mobile IP bekannten Konzept einer Home Address (HoA) und einer Care-of Address (CoA) wird zwischen dem mobilen Gerät oder dem mobilen Netzwerk und einem home agent (HA) ein bidirektionaler IP-in-IP Tunnel eingerichtet und so ein Layer-3 Mobility Protocol angewendet. Für den Fall eines mobilen Netzwerks kann ein mobiler Router eingerichtet sein, um Datenpakete, welche über den IP-in-IP Tunnel vom oder zum HA übertragen werden, über eine IP Verbindung an oder von Endgeräten des mobilen Netzwerks zu übertragen. Durch die Verwendung von mehreren Netzwerkschnittstellen kann ein permanenter Zugang, ein Load Balancing, Redundanz und ein Bi-Casting ermöglicht werden.

In der Publikation PERERA E ET AL: "OptiNets: an architecture to enable optimal routing for network mobility" 2004 INTERNATIONAL WORKSHOP ON WIRELESS AD-HOC NETWORKS (IEEE CAT. NO. 05EX789) IEEE PISCATAWAY, NJ, USA, 2004, Seiten 68-72, ISBN: 0-7803-8275-7, wird eine Architektur beschrieben, mit welcher Endgeräte eines mobilen Netzwerks konfiguriert werden können. Falls es sich um ein IPv4 Endgerät handelt, dann wird das Endgerät gemäss dem NEMO (NEMO: Network Mobility) Protokoll konfiguriert. Falls es sich um ein IPv6 Endgerät handelt, dann wird auf dem Endgerät eine Adresse mit dem prefix des aktuellen Standorts konfiguriert und es wird eine MIPv6 Route Optimization durchgeführt, um eine IP Verbindung zum Endgerät zu konfigurieren.

In der Publikation ERNST, THIERRY; CHARBON, JULIEN: "Multihoming with NEMO Basic Support" PROCEEDINGS OF THE FIRST INTERNATIONAL CONFERENCE ON MOBILE COMPUTING AND UBIQUITOUS NETWORKING (ICMU 2004), YOKOSUKA, JAPAN, 8. Januar 2004, Seiten 1-6, werden multihomed mobile Netzwerke beschrieben. Es werden Konfigurationen von mobilen Netzwerken untersucht, welche durch ein oder mehrere mobile Router, Home Agents oder Mobile Network Prefixes, welche gegenüber den Endgeräten des mobilen Netzwerks angekündigt werden, gebildet sind.

In der IEEE Veröffentlichung von Nicolas Rouhanna & Eric Horlait betreffend einen Bluetooth web Internet Gateway (BWIG), die am siebten internationalen Symposium on Computers & Communications in 2002 vorgetragen worden ist, wird eine Lösung vorgeschlagen, um Web Browsing durch Bluetooth Geräte zu ermöglichen, ohne dass eine IP-Schichte auf diesen Geräten implementiert wird. Sogenannte Channel Identifiers (CIDs) werden auf L2CAP benutzt, um die Vermittlung von Daten-Paketen nur mit Hilfe von einem OSI-Schicht 2 Protokoll ausführen zu können. Jedoch werden gemäss dieser Bridging-Lösung weder die unterschiedlichen Erfordernisse von uneinheitlichen Anwendungen betrachtet, noch die Schaltung zwischen verschiedenen verfügbaren IP-Schnittstellen unterstützt.

Die Patentanmeldung US2002/0094829 beschreibt ein Informationssystem für Fahrzeuge, die über eine Funkschnittstelle herunterladene Unterhaltungsprogramme oder Informationen an Geräte von Passagieren über eine kontaklose Schnittstelle weiterleiten kann, wobei diese kontaktlose Schnittstelle auch für Authentifizierungszwecke benutzt werden kann, indem die auf den Geräten gespeicherten identifizierungsdaten von Passagieren dadurch erfasst werden können. Auf der kontaktlosen Schnittstelle ist ein OSI-Schichte 2 Protokoll wie z.B. Bluetooth implementiert; jedoch ist weder IP-Funktionalität auf den Geräten unterstützt, noch ist ein Gateway vorhanden, um irgendwelche Verknüpfung zu einem IP-Netz für solche Geräte zu gewährleisten.

### Darstellung der Erfindung

Es ist eine Aufgabe der vorliegenden Erfindung, ein neues Verfahren und ein neues System zur Übertragung von Datenpaketen vorzuschlagen, welches Verfahren und welches System nicht die Nachteile des Standes der Technik aufweisen.

Gemäss der vorliegenden Erfindung werden diese Ziele insbesondere durch die Merkmale der unabhängigen Ansprüche erreicht.

Weitere vorteilhafte Ausführungsformen gehen ausserdem aus den
abhängigen Ansprüchen und der Beschreibung hervor.
Insbesondere werden diese Ziele durch ein Verfahren zur Übertragung von Datenpaketen gemäss Anspruch 1 erreicht. So kann der erste Kommunikationsknoten beispielsweise als Bridge ausgestaltet sein, welche Bridge eine erste drahtlose Netzwerkschnittstelle, beispielsweise eine UMTS Netzwerkschnittstelle, zur Erstellung einer Kommunikationsverbindung mit einem IP-basierten Netzwerk und eine zweite drahtlose lokale Netzwerkschnittstelle, beispielsweise eine Bluetooth Netzwerkschnittstelle, zur Erstellung einer drahtlosen lokalen Kommunikationsverbindung umfasst. In dieser Ausgestaltungsvariante wird vorteilhafterweise auf dem zweiten Kommunikationsknoten eine zweite IP-Adresse konfiguriert, wobei die zweite IP-Adresse einer IP-Home Adresse oder einem Identifikator zugeordnet, beispielsweise gemäss einem Mobile IP Standard oder gemäss einem Host Identification Protocol, abgespeichert wird. Eine solche Ausführungsvariante hat insbesondere den Vorteil, dass auf einem zweiten Kommunikationsknoten mit einer drahtlosen lokalen Kommunikationsschnittstelle, wie beispielsweise einer Bluetooth Schnittstelle, eine IP-Adresse konfiguriert werden kann, auf Grund welcher IP-Adresse mit dem zweiten Kommunikationsknoten bei einer Verfügbarkeit einer drahtlosen lokalen Kommunikationsverbindung stets kommuniziert werden kann. So kann beispielsweise in den Autobussen eines Busunternehmens wie beschrieben ein Bridge angeordnet sein. Der zweite Kommunikationsknoten eines Benutzers, welcher von einem ersten Autobus in einen zweiten Autobus wechselt, verfügt so über eine feste IP-basierte Kommunikationsverbindung und es können so z.B. aktuelle Börsenkurse ständig an den zweiten Kommunikationsknoten des Benutzers übermittelt werden. Im Stand der Technik ist eine solche Kommunikation mit einem zweiten Kommunikationsknoten nur unter der Verwendung einer wesentlich aufwendigeren drahtlosen Schnittstelle des zweiten Kommunikationsknotens, wie beispielsweise einer UMTS Schnittstelle, bekannt. Der erste Kommunikationsknoten kann aber auch als Kommunikationsknoten mit mehreren ersten drahtlosen Netzwerkschnittstellen, beispielsweise einer UMTS Netzwerkschnittstelle und einer WLAN Netzwerkschnittstelle, ausgestaltet sein. So kann der erste Kommunikationsknoten insbesondere als Notebook mit mehreren solchen ersten drahtlosen Netzwerkschnittstellen ausgestaltet sein. Die drahtlose lokale Kommunikationsverbindung zwischen dem ersten Kommunikationsknoten und dem zweiten Kommunikationsknoten kann beispielsweise als Bluetooth Kommunikationsverbindung ausgestaltet sein. Der zweite Kommunikationsknoten kommuniziert über irgendein Protokoll, beispielsweise über ein Bluetooth Protokoll, mit dem ersten Kommunikationsknoten und basierend auf diesem Protokoll können Daten zwischen dem zweiten Kommunikationsknoten und dem ersten Kommunikationsknoten ausgetauscht werden. In dieser Ausgestaltungsvariante kann auf dem ersten Kommunikationsknoten eine IP-Adresse konfiguriert werden, wobei diese IP-Adresse einer IP-Home Adresse oder einem Identifikator zugeordnet, beispielsweise gemäss einem Mobile IP Standard oder gemäss einem Host Identification Protocol, abgespeichert wird. Mit einem solchen Verfahren kann insbesondere eine ständige Verfügbarkeit einer IP basierten Kommunikationsverbindung zwischen dem ersten Kommunikationsknoten und einem IP-basierten Netzwerk sichergestellt werden, wobei diese Kommunikationsverbindung mittels des ersten Kommunikationsknotens über die drahtlose lokale Kommunikationsverbindung bis zum zweiten Kommunikationsknoten weitergeführt werden kann. So kann einem zweiten Kommunikationsknoten, welcher nur über eine drahtlose lokale Netzwerkschnittstelle wie beispielsweise eine Bluetooth Netzwerkschnittstelle, eine ständig verfügbare Kommunikationsverbindung mit einem IP-basierten Netzwerk zur Verfügung gestellt werden. Ein solches Verfahren kann besonders vorteilhaft für zweite Kommunikationsgeräte mit einem beschränkten Volumen und Energiespeicher eingesetzt werden.

In einer Ausführungsvariante werden Parameter der mindestens einen ersten drahtlosen Netzwerkschnittstelle des ersten Kommunikationsknotens und/oder Parameter des mindestens einen IP-basierten Netzwerks über die drahtlose lokale Kommunikationsverbindung an den zweiten Kommunikationsknoten übermittelt. Ein solcher Parameter kann sich beispielsweise auf eine Übertragungsbandbreite, auf eine Identifikation des IP-basierten Netzwerks, auf eine Identifikation der mindestens einen ersten Netzwerkschnittstelle oder auf irgendeinen anderen Parameter beziehen. Aus der Identifikation des IP-basierten Netzwerks lässt sich beispielsweise ableiten, ob eine Kommunikation zu einem IP-basierten Netzwerk erfolgt, welches beispielsweise bestimmte Qualitätskriterien, wie z.B. mittlere Bandbreite pro Benutzer und/oder maximale Kosten pro Zeiteinheit, erfüllt. Aus der Identifikation der mindestens einen Netzwerkschnittstelle lässt sich beispielsweise ableiten, ob eine Kommunikation basierend auf einem GSM Netzwerk, einem UMTS Netzwerk oder einem WLAN Netzwerk erfolgt und ob damit beispielsweise eine bestimmte Sicherheit der Kommunikation gewährleistet ist. Eine solche Ausführungsvariante hat insbesondere den Vorteil, dass Applikationen des zweiten Kommunikationsknotens an eine verfügbare Netzwerkschnittstelle und/oder an ein verfügbares IP-basiertes Netzwerk angepasst werden können, indem bei der Übertragung von Datenpaketen beispielsweise ein zusätzliches Kompressionsmodul oder ein zusätzliches Verschlüsselungsmodul aktiviert werden kann.

In einer anderen Ausführungsvariante werden mehrere erste drahtlose Netzwerkschnittstellen des ersten Kommunikationsknotens zur Verbindung mit mindestens einem IP-basierten Netzwerk konfiguriert und mittels eines Load-Balancing-Moduls des ersten Kommunikationsknotens (1) werden Datenpakete an die ersten drahtlosen Netzwerkschnittstellen (11,12) übertragen. Eine solche Ausführungsvariante hat insbesondere den Vorteil, dass eine besonders robuste und ausfallsichere Kommunikationsverbindung zu mindestens einem IP-basierten Netzwerk erstellt werden kann.

In einer Ausführungsvariante werden zwischen dem zweiten Kommunikationsknoten und mehreren ersten Kommunikationsknoten mehrere drahtlose lokale Kommunikationsverbindungen konfiguriert und mittels eines Load-Balancing-Moduls des zweiten Kommunikationsknotens werden Datenpakete an die ersten Kommunikationsknoten übertragen. Eine solche Ausführungsvariante hat insbesondere den Vorteil, dass die drahtlose lokale Kommunikation zwischen dem zweiten Kommunikationsknoten und ersten Kommunikationsknoten besonders robust und ausfallsicher ausgestaltet werden kann.

In einer weiteren Ausführungsvariante werden mittels eines Analysemoduls Parameter der mehreren ersten drahtlosen Netzwerkschnittstellen des ersten Kommunikationsknotens respektive Parameter der mehreren lokalen Kommunikationsverbindungen erfasst und ein über die lokale Kommunikationsverbindung übertragenes Datenpaket respektive ein zu übertragendes Datenpaket wird mittels des Analysemoduls in Bezug auf die erfassten Parameter analysiert und aufgrund dieser Analyse wird mindestens eine der mehreren ersten drahtlosen Netzwerkschnittstellen respektive mindestens eine der mehreren drahtlosen lokalen Kommunikationsverbindungen zur Übertragung des Datenpakets an mindestens ein IP-basiertes Netzwerk respektive an mindestens einen ersten Kommunikationsknoten selektiert wird. So kann beispielsweise ein Datenpaket, welches über ein besonders sicheres IP-basiertes Netzwerk übertragen werden soll, über eine erste Netzwerkschnittstelle mit entsprechenden Sicherheitsmerkmalen wie z.B. einem Verschlüsselungsmodul und ein Datenpaket, welches über ein besonders schnelles IP-basiertes Netzwerk übertragen werden soll, über eine erste Netzwerkschnittstelle mit entsprechenden Leistungsmerkmalen wie z.B. einer maximalen Bandbreite übertragen werden. Eine solche Ausführungsvariante hat insbesondere den Vorteil, dass die Übertragung von Datenpaketen an die verfügbaren ersten drahtlosen Netzwerkschnittstellen respektive an die verfügbaren drahtlosen lokalen Kommunikationsverbindungen gemäss definierbarer Kriterien angepasst werden kann.

In einer anderen Ausführungsvariante werden Datenpakete, welche über die lokale Kommunikationsverbindung übertragen werden, vor der Übertragung mit einem Kennzeichnungs-Tag markiert und es wird auf dem Load-Balancing-Modul eine Tabelle mit Kennzeichnungs-Tags und entsprechender Netzwerkschnittstellen abgespeichert und es werden Datenpakete aufgrund des Kennzeichnungs-Tags und der Tabelle mit Kennzeichnungs-Tags an mindestens eine der mehreren ersten drahtlosen Netzwerkschnittstellen übertragen. Die Kennzeichnung der Datenpakete mittels eines Kennzeichnungs-Tags kann beispielsweise aufgrund von Applikationseinstellungen des zweiten Kommunikationsknotens erfolgen. So kann beispielsweise ein E-Mail Client bei der Anmeldung an einen E-Mail Server ein erstes Kennzeichnungs-Tag so festlegen, dass eine besonders sichere erste drahtlose Netzwerkschnittstelle selektiert wird. Hingegen kann der E-Mail Client beim Herunterladen einer E-Mail Nachricht das Kennzeichnungs-Tag so festlegen, dass eine besonders schnelle erste drahtlose Netzwerkschnittstelle selektiert wird. Eine solche Ausführungsvariante hat insbesondere den Vorteil, dass die Übertragung von Datenpakten gemäss definierbarer Kriterien dynamisch optimiert werden kann.

In einer weiteren Ausführungsvariante wird der drahtlosen lokalen Kommunikationsverbindung eine Port-Nummer zugeteilt und es werden Datenpakete an das mindestens eine IP-basierte Netzwerk mit dieser Port-Nummer als Quell-Port übermittelt. Eine solche Ausführungsvariante hat insbesondere den Vorteil, dass beispielsweise mehrere zweite Kommunikationsknoten je eine lokale Kommunikationsverbindung zu einem ersten Kommunikationsknoten konfigurieren können, wobei durch die Angabe des Quell-Port eine bidirektionale Kommunikationsverbindung zwischen irgendeinem IP-basierten Kommunikationsknoten und den zweiten Kommunikationsknoten erstellt werden kann.

In einer anderen Ausführungsvariante wird als lokale Kommunikationsverbindung eine drahtlose Bluetooth-Verbindung und/oder eine IrDA-Verbindung erstellt. Selbstverständlich können hier auch andere Technologien wie UWB (UWB: Ultra Wide Band), WLAN, USB (USB: Universal Serial Bus) oder weitere zukünftige Technologien verwendet werden. Eine solche Ausführungsvariante hat insbesondere den Vorteil, dass die Übertragung von Datenpaketen mittels weit verbreiteter und bekannter Technologien erfolgen kann.

In einer weiteren Ausführungsvariante wird als mindestens eine erste drahtlose Netzwerkschnittstelle des ersten Kommunikationsknotens eine HSPA basierte Netzwerkschnittstelle (HSPA: High Speed Packet Access), eine UMTS basierte Netzwerkschnittstelle, eine EDGE basierte Netzwerkschnittstelle, eine GPRS basierte Netzwerkschnittstelle und/oder eine WLAN basierte Netzwerkschnittstelle verwendet. Eine solche Ausführungsvariante hat insbesondere den Vorteil, dass die Übertragung von Datenpaketen mittels Technologien erfolgen kann, welche sowohl in Bezug auf die Netzwerkinfrastruktur als auch in Bezug auf den ersten Kommunikationsknoten weit verbreitet sind.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figur illustriert:
Figur 1 zeigt ein Blockdiagramm mit den einzelnen Bestandteilen eines erfindungsgemässen Verfahrens und Systems zur Übertragung von Datenpaketen gemäss einer ersten Ausführungsvariante.
Figur 2 zeigt ein Blockdiagramm mit den einzelnen Bestandteilen eines erfindungsgemässen Verfahrens und Systems zur Übertragung von Datenpaketen gemäss einer zweiten Ausführungsvariante.

### Weg(e) zur Ausführung der Erfindung

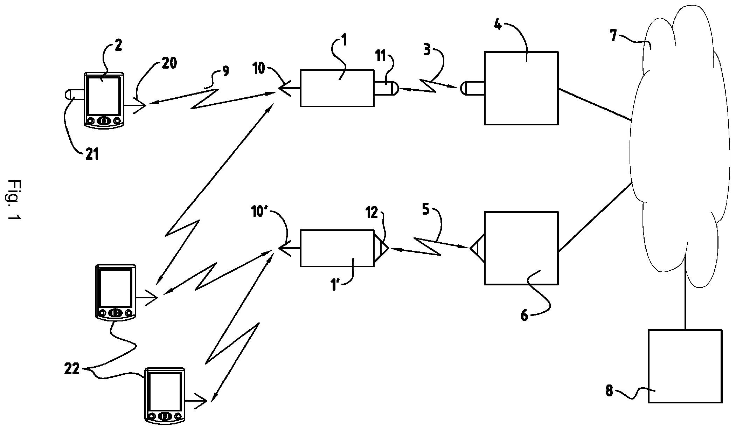

In Figur 1 bezieht sich das Bezugszeichen 1 auf einen ersten Kommunikationsknoten. Der erste Kommunikationsknoten 1 kann sich auf ein Notebook, einen festinstallierten Computer, auf ein mobiles Telefon, auf einen PDA (Personal Digital Assistant) oder auf irgendeinen anderen Kommunikationsknoten beziehen. Der erste Kommunikationsknoten 1 kann sich insbesondere auch auf einen Bridge oder einen Router zur Verbindung von Kommunikationsnetzwerken beziehen. Wie in Figur 1 gezeichnet, können mehrere Instanzen des ersten Kommunikationsknotens angebracht sein. In Figur 1 bezieht sich das Bezugszeichen 1' auf eine weitere Instanz des ersten Kommunikationsknotens 1. Selbstverständlich können eine beliebige Anzahl von Instanzen des ersten Kommunikationsknotens 1 angebracht sein. Wie in Figur 1 gezeichnet können somit mehrere erste Kommunikationsknoten 1,1' angeordnet sein. Wie in Figur 1 gezeichnet umfassen die ersten Kommunikationsknoten 1,1' mindestens eine erste drahtlose Netzwerkschnittstelle 11,12 zur Erstellung von Datenverbindungen 3,5 mit Verbindungsstationen 4,6 eines IP-basierten Netzwerks 7. Die Datenverbindungen 3,5 können als unidirektionale, wie z.B. als broadcast oder als unicast uplink Datenverbindungen, oder als bidirektionale Datenverbindungen ausgeführt sein. Es sei erwähnt, dass der Begriff IP-basiertes Netzwerk in diesem Text auf Netzwerke bezieht, welche generell in der Lage sind, IP Datenpakete zu transportieren. Solche IP-basierte Netzwerke sind nicht nur auf die in der Literatur bekannten All-IP Netzwerke beschränkt, sondern auf alle IP-fähigen Netzwerke. Die Netzwerkschnittstellen 11,12 können sich auf HSPA basierte Netzwerkschnittstellen (HSPA: High Speed Packet Access), auf UMTS basierte Netzwerkschnittstellen (UMTS: Universal Mobile Telecommunications System), auf EDGE basierte Netzwerkschnittstellen (EDGE: Enhanced Data Rates for GSM Evolution), auf GPRS basierte Netzwerkschnittstellen (GPRS: General Packet Radio Service), auf WLAN basierte Netzwerkschnittstellen (WLAN: Wireless Local Area Network) oder auf irgendeine andere Netzwerkschnittstelle beziehen.

In Figur 1 beziehen sich die Bezugszeichen 10,10' auf eine drahtlose lokale Netzwerkschnittstelle. Die drahtlosen lokalen Netzwerkschnittstellen 10,10' können beispielsweise als IrDA Netzwerkschnittstelle (IrDA: Infrared Data Access), als Bluetooth Netzwerkschnittstelle, als NFC Netzwerkschnittstelle (NFC: Near Field Communications), als UWB Netzwerkschnittstelle (UWB: Ultra Wide Band) oder als irgendeine andere drahtlose lokale Netzwerkschnittstelle ausgeführt sein. Eine solche drahtlose lokale Netzwerkschnittstelle hat insbesondere einen Wirkungsbereich von einigen Metern und zeichnet sich durch einen sehr geringen Energieverbrauch und durch einen kleinen Platzbedarf aus. In Figur 1 bezieht sich das Bezugszeichen 2 auf einen zweiten Kommunikationsknoten. Der zweite Kommunikationsknoten 2 kann sich insbesondere auf einen PDA (Personal Digital Assistant), auf eine Armbanduhr, auf ein mobiles Telefon oder auf irgendeinen anderen Kommunikationsknoten beziehen. Der zweite Kommunikationsknoten 2 verfügt über eine der drahtlosen lokalen Netzwerkschnittstelle 10,10' entsprechende drahtlose lokale Netzwerkschnittstelle 20. Mittels der drahtlosen lokalen Netzwerkschnittstellen 10,10' der ersten Kommunikationsknoten 1,1' und der drahtlosen lokalen Netzwerkschnittstelle 20 des zweiten Kommunikationsknoten 2 kann über ein entsprechendes Protokoll, also beispielsweise über ein IrDA Protokoll oder über ein Bluetooth Protokoll, eine drahtlose oder drahtgebundene lokale Kommunikationsverbindung 9 zwischen dem zweiten Kommunikationsknoten 2 und dem ersten Kommunikationsknoten 1 erstellt werden. Dies kann beispielsweise mittels an den Kommunikationsknoten 1,2 angebrachten Überwachungsmodulen erfolgen, welche gemäss einem entsprechenden Protokoll eine lokale Kommunikationsverbindung 9 zwischen den Kommunikationsknoten 1,2 erstellen, sobald sich die drahtlosen lokalen Netzwerkschnittstellen gegenseitig im Wirkungsbereich befinden. So kann sich der erste Kommunikationsknoten 1 auf eine Bridge beziehen, welche in einem Autobus angebracht ist. Ein solcher Bridge kann beispielsweise als drahtlose Netzwerkschnittstelle 11 eine UMTS Netzwerkschnittstelle umfassen und als drahtlose lokale Netzwerkschnittstelle 10 eine Bluetooth Netzwerkschnittstelle umfassen. Sobald ein Benutzer mit einem zweiten Kommunikationsknoten 2, also beispielsweise einem PDA mit einer Bluetooth Schnittstelle, den Autobus besteigt, kann zwischen der Bridge und dem PDA durch entsprechende Überwachungsmodule des Bridge und des PDA eine lokale Kommunikationsverbindung 9 zwischen der Bridge und dem PDA erstellt werden. Die lokale Kommunikationsverbindung 9 kann insbesondere als Layer 2 Verbindung ausgestaltet sein. Selbstverständlich kann basierend auf einer solchen Layer 2 Verbindung durch entsprechende Module der Kommunikationsknoten 1,2 auch eine beliebige Verbindung eines höheren Layers erstellt werden, also insbesondere eine IP-basierte Verbindung eines Layer 3.

Der erste Kommunikationsknoten 1 ist mittels der drahtlosen Netzwerkschnittstelle 11 über eine IP-basierte Verbindung mit dem IP-basierten Netzwerk 7 verbunden. Auf der drahtlosen Netzwerkschnittstelle 11 wird dementsprechend eine erste IP-Adresse konfiguriert. Dies kann über übliche Methoden wie beispielsweise gemäss einem DHCP Protokoll (DHCP: Dynamic Host Configuration Protocol), gemäss stateful autoconfiguration des IPv6, gemäss stateless autoconfiguration, bei welcher der Kommunikationsknoten 1 die erste IP-Adresse mittels der MAC-Adresse und der Netz-Adresse oder der Subnetz-Adresse bildet, oder gemäss irgendeiner anderen Methode erfolgen. Als Beispiel für eine Konfiguration einer IP-Adresse sei hier auch PDP erwähnt (PDP: Packet Data Protocol). Mittels der ersten IP-Adresse können somit IP-basierte Kommunikationsverbindungen zwischen dem ersten Kommunikationsknoten 1 und dem IP-basierten Netzwerk erstellt werden.

Sobald die lokale Kommunikationsverbindung 9 zwischen dem zweiten Kommunikationsknoten 2 und dem ersten Kommunikationsknoten 1 erstellt ist, können zwei verschiedene Varianten zum Zuge kommen.

In einer ersten Variante wird auf dem zweiten Kommunikationsknoten 2 eine zweite IP-Adresse konfiguriert. Diese zweite IP-Adresse kann wie bei der ersten IP-Adresse mittels entsprechender Methoden, also beispielsweise mittels DHCP oder irgendeiner anderen Methode, konfiguriert werden. Sobald die zweite IP-Adresse konfiguriert ist, kann diese zweite IP-Adresse einer IP-Home Adresse oder einem Identifikator zugeordnet abgespeichert werden. Diese kann insbesondere mittels eines nachfolgend beschriebenen Zuordnungsmoduls 8 erfolgen.

In einer zweiten Variante wird auf dem zweiten Kommunikationsknoten 2 keine weitere IP-Adresse konfiguriert. In diesem Fall umfasst die lokale Kommunikationsverbindung 9 beispielsweise nur ein Layer 2 Protokoll. Mittels entsprechender Module des zweiten Kommunikationsknotens 2 und des ersten Kommunikationsknotens 1 kann beispielsweise sichergestellt werden, dass der zweite Kommunikationsknoten wie eine auf dem ersten Kommunikationsknoten 1 ablauffähige Applikation wirkt. In diesem Fall wird jedoch die erste IP-Adresse einer IP-Home Adresse oder einem Identifikator zugeordnet abgespeichert. Diese kann wiederum insbesondere mittels eines nachfolgend beschriebenen Zuordnungsmoduls 8 erfolgen.

In Figur 1 bezieht sich das Bezugszeichen 8 auf ein Zuordnungsmodul. Das Zuordnungsmodul 8 kann Mittel umfassen, um eine IP-Home Adresse respektive einen Identifikator einer IP-Adresse zugeordnet abzuspeichern. Das Zuordnungsmodul 8 kann insbesondere als ein Softwaremodul ausgeführt sein, welches Softwaremodul auf einem mit dem IP-basierten Netzwerk 7 verbundenen Server abgearbeitet werden kann. So kann beispielsweise dem ersten Kommunikationsknoten 1 oder dem zweiten Kommunikationsknoten 2 eine IP-Home Adresse zugeordnet werden und diese IP-Home Adresse kann im Zuordnungsmodul 8 abgespeichert werden. Sobald auf einer der Netzwerkschnittstellen 11,12 des ersten Kommunikationsknotens 1 eine erste IP-Adresse konfiguriert wird, kann diese erste IP-Adresse, beispielsweise durch den Kommunikationsknoten 1, im Zuordnungsmodul 8 der IP-Home Adresse zugeordnet abgespeichert werden. Selbstverständlich kann sobald auf dem zweiten Kommunikationsknoten 2 eine zweite IP-Adresse konfiguriert wird, diese zweite IP-Adresse der IP-Home Adresse zugeordnet abgespeichert werden. Das Zuordnungsmodul 8 kann sich beispielsweise auf einen Home-Agent beziehen, wie dies im Dokument RFC 3344 "IP Mobility Support for IPv4" (RFC: Request for Comments) der IETF (IETF: Internet Engineering Task Force) beschrieben wird. Das Zuordnungsmodul 8 kann sich aber beispielsweise auch auf einen Rendevous-Server beziehen, wie dieser im Internet Draft "Host Identity Protocol Architecture" der IETF beschrieben wird. Selbstverständlich kann das Zuordnungsmodul 8 auch gemäss einem anderen Verfahren oder Standard ausgeführt sein. So kann beispielsweise dem zweiten Kommunikationsknoten ein Identifikator zugeordnet werden und im Zuordnungsmodul 8 abgespeichert werden. Nachdem eine lokale Kommunikationsverbindung 9 zwischen dem zweiten und dem ersten Kommunikationsknoten 1,2 erstellt worden ist und sobald durch eine Konfiguration einer ersten IP-Adresse auf einer der Netzwerkschnittstellen 11,12 des ersten Kommunikationsknotens 1 eine Verbindung zwischen dem ersten Kommunikationsknoten 1 und dem IP-basierten Netzwerk 7 erstellbar ist, kann beispielsweise die erste IP-Adresse und eine Nummer eines Ports dem Identifikator des zweiten Kommunikationsknoten zugeordnet abgespeichert werden. So kann sich der zweite Kommunikationsknoten beispielsweise auf eine Armbanduhr mit einer Bluetooth Schnittstelle beziehen und der erste Kommunikationsknoten kann sich auf ein mobiles Telefon mit einer Bluetooth Schnittstelle und einer GSM Schnittstelle beziehen. Der Armbanduhr kann ein Identifikator, beispielsweise eine Nummer bestehend aus einer 128-bit Zahl, zugeordnet werden. Wie beschrieben kann die erste Applikation des ersten Kommunikationsknotens 1 so ausgeführt sein, dass sobald über eine lokale Kommunikationsverbindung 9 eine Verbindung zwischen einer auf der Armbanduhr aktiven zweiten Applikation und der ersten Applikation erstellt werden kann und sobald auf einer der Netzwerkschnittstellen 11,12 eine IP-Adresse zur Verbindung mit einem IP-basierten Netzwerk 7 erstellt werden kann, die IP-Adresse zusammen mit einer Nummer eines Ports, welcher sich auf die Verbindung zwischen der ersten Applikation und der zweiten Applikation bezieht, dem Identifikator der Armbanduhr zugeordnet abgespeichert werden. Dies ermöglicht, dass mittels dieser beispielsweise 128-bit Zahl stets auf Applikationen der Armbanduhr zugegriffen werden kann. Die zweite Applikation kann sich beispielsweise auf eine Applikation zur Synchronisation der Zeit der Armbanduhr mit einem mit dem IP-basierten Netzwerk 7 verbindbaren Zeitserver beziehen. Die zweite Applikation kann sich aber auch auf eine Alarmapplikation beziehen, wobei aktuelle Alarmdaten von einem mit dem IP-basierten Netzwerk 7 verbindbaren Alarmserver auf die Armbanduhr geladen werden, sobald durch entsprechend aktualisierte Einträge des Zuordnungsmoduls 8 die Verfügbarkeit einer Kommunikationsverbindung zwischen dem Alarmserver und der Alarmapplikation der Armbanduhr gegeben ist.

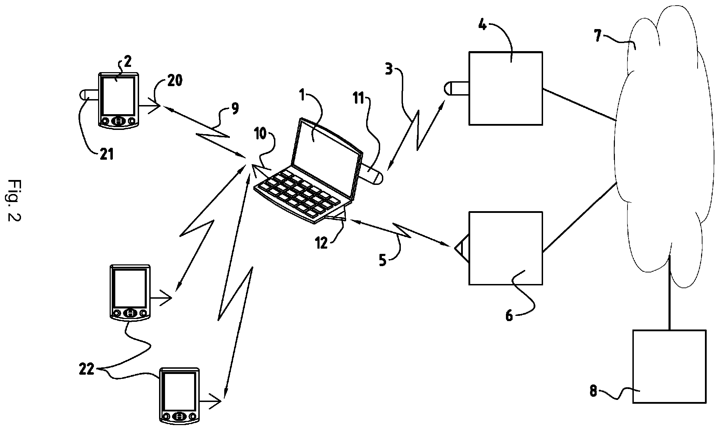

In Figur 2 bezieht sich das Bezugszeichen 1 auf einen ersten Kommunikationsknoten. Der erste Kommunikationsknoten 1 kann sich wiederum auf ein Notebook, einen festinstallierten Computer, auf ein mobiles Telefon, auf einen PDA (Personal Digital Assistant) oder auf irgendeinen anderen Kommunikationsknoten beziehen. Der erste Kommunikationsknoten 1 umfasst Netzwerkschnittstellen 11,12 zur Erstellung von Verbindungen 3,5 mit Verbindungsstationen 4,6 eines IP-basierten Netzwerks 7. In einer bevorzugten Ausführungsvariante bezieht sich der erste Kommunikationsknoten 1 auf ein Notebook mit einer installierten Netzwerkkarte mit einer HSPA basierten Netzwerkschnittstelle (HSPA: High Speed Packet Access), einer UMTS basierten Netzwerkschnittstelle (UMTS: Universal Mobile Telecommunications System), einer EDGE basierten Netzwerkschnittstelle (EDGE: Enhanced Data Rates for GSM Evolution), einer GPRS basierten Netzwerkschnittstelle (GPRS: General Packet Radio Service) und/oder einer WLAN basierten Netzwerkschnittstelle (WLAN: Wireless Local Area Network). Eine solche Netzwerkkarte wird beispielsweise von der Firma Swisscom Mobile AG unter dem Namen "Mobile Unlimited" vermarktet. Die Verbindungen 3,5 zwischen den Netzwerkschnittstellen 10,11 des Kommunikationsknotens 1 und den Verbindungsstationen 4,6 werden von einem Netzbetreiber gemäss dessen Spezifikation mittels entsprechender Netzwerkkomponenten erstellt. So können die Verbindungsstationen 4,6 derart spezifiziert und konfiguriert sein, dass, sobald sich der Kommunikationsknoten 1 im Wirkungsbereich einer der Verbindungsstationen 4,6 befindet, auf der entsprechenden Netzwerkschnittstelle eine IP-Adresse konfiguriert wird. Eine solche Konfiguration einer IP-Adresse kann beispielsweise mittels eines DHCP-Servers erfolgen oder mittels einer der weiter oben beschriebenen Methoden zur Konfiguration einer IP-Adresse auf einer Netzwerkschnittstelle erfolgen. In Figur 2 sind die Verbindungen 3,5 als drahtlose Verbindungen dargestellt. Allerdings kann sich eine Verbindung 3,5 sowohl auf eine drahtbasierte Verbindung, beispielsweise mittels eines twisted-pair Ethernet Kabels, als auch auf eine drahtlose Verbindung, beispielsweise einer auf Radiowellen basierten Funkverbindung, beziehen. Dementsprechend kann es sich bei den Verbindungsstationen 4,6 beispielsweise um einen Ethernet Switch eines Ethernet basierten Netzwerks, um eine Basisstation eines GSM basierten Netzwerks oder um einen Access Point eines WLAN basierten Netzwerks handeln.

In Figur 2 bezieht sich das Bezugszeichen 2 auf einen zweiten Kommunikationsknoten. Der zweite Kommunikationsknoten 2 kann sich auf ein Notebook, einen festinstallierten Computer, auf ein mobiles Telefon, auf einen PDA (Personal Digital Assistant) oder auf irgendeinen anderen Kommunikationsknoten beziehen. Der zweite Kommunikationsknoten 2 kann sich auch auf ein elektronisches Gerät, wie beispielsweise eine Armbanduhr, einen Taschenrechner, ein Pulsmessgerät oder auf irgendein anderes elektronisches Gerät beziehen. Der erste Kommunikationsknoten 1 und der zweite Kommunikationsknoten 2 umfassen lokale Kommunikationsschnittstellen 10,20 zur Erstellung einer lokalen Kommunikationsverbindung 9. Der Vollständigkeit halber sei erwähnt, dass der zweite Kommunikationsknoten eine weitere Netzwerkschnittstelle 21 oder mehrere weitere Netzwerkschnittstellen umfassen kann. Die Netzwerkschnittstelle 21 kann sich wiederum beispielsweise auf eine Netzwerkschnittstelle zur Verbindung mit einer Basisstation eines GSM basierten Netzwerks oder zur Verbindung mit einem Access Point eines WLAN basierten Netzwerks beziehen.

Beim zweiten Kommunikationsknoten 2 kann es sich insbesondere um ein elektronisches Gerät mit kleinen Dimensionen und kleinen Energiereserven, wie beispielsweise eine Armbanduhr, handeln. Selbstverständlich kann an ein solches elektronisches Gerät eine Netzwerkschnittstelle zur Verbindung mit einer Verbindungsstation 4,6 und somit zur Verbindung mit dem Netzwerk 7 angebracht werden. Allerdings wäre eine solche Netzwerkschnittstelle, insbesondere wegen der zusätzlich benötigten Energiereserven, nicht in einer genügend miniaturisierten Form herstellbar, was die Akzeptanz am Markt wesentlich einschränken würde. Beispielsweise umfassen Armbanduhren des von Microsoft Corp. angebotener Service "msn direct" (www.msndirect.com) einen FM Receiver (FM: Frequency Modulation) um neueste Nachrichten zu empfangen. Allerdings beschränkt sich diese Technologie auf eine unidirektionale Datenübertragung. Zudem muss die Batterie der so ausgerüsteten Armbanduhren schon nach wenigen Tagen wieder aufgeladen werden. Hingegen sind drahtlose lokale Netzwerkschnittstellen 10,20 zur Erstellung einer drahtlosen lokalen Kommunikationsverbindung 9 inzwischen in einer genügend miniaturisierbaren Form herstellbar. Eine solche lokale Kommunikationsverbindung 9 kann gemäss dem Bluetooth Standard, dem IrDA Standard oder gemäss irgendeinem anderen standardisierten oder nicht standardisierten Verfahren ausgeführt sein. Auf den Kommunikationsknoten 1,2 sind Mittel vorgesehen, um Applikationen auf diesen Kommunikationsknoten 1,2 auszuführen. Solche Mittel können insbesondere einen Mikroprozessor sowie entsprechende Logikschaltungen umfassen. Dabei wird durch weitere Mittel, wie beispielsweise einem auf dem Mikroprozessor lauffähigen Betriebssystem mit Bibliotheksfunktionen, sichergestellt, dass auf einem bestimmten Kommunikationsknoten zwischen einer Applikation und der lokalen Netzwerkschnittstelle des bestimmten Kommunikationsknotens bidirektional oder auch unidirektional Daten ausgetauscht werden können. Mittels der lokalen Kommunikationsverbindung 9 sind Daten zwischen dem zweiten Kommunikationsknoten 2 und dem ersten Kommunikationsknoten 1 übertragbar. Somit können insbesondere Daten zwischen einer Applikation des zweiten Kommunikationsknotens 2 und einer Applikation des ersten Kommunikationsknotens 1 übertragen werden.

Die auf den Kommunikationsknoten 1,2 ablauffähigen Applikationen können gemäss sehr interessanten Ausgestaltungen ausgeführt sein. Nachfolgend wird eine auf dem ersten Kommunikationsknoten 1 ablauffähige Applikation als erste Applikation und eine auf dem zweiten Kommunikationsknoten 2 ablauffähige Applikation als zweite Applikation bezeichnet.

So kann beispielsweise die zweite Applikation Mittel umfassen, um Parameter über die Netzwerkschnittstellen 11,12 des ersten Kommunikationsknotens, wie beispielsweise die verfügbare Netzwerkbandbreite, die konfigurierte IP Adresse oder irgendeinen anderen Parameter, abzuspeichern. Die erste Applikation kann derart ausgestaltet sein, um eine der Netzwerkschnittstellen 11,12 zu selektieren, beispielsweise aufgrund eines Parameters welcher von der zweiten Applikation an die erste Applikation übermittelt wird, und Daten welche über die lokale Kommunikationsverbindung 9 von der zweiten Applikation empfangen wurden an die selektierte Netzwerkschnittstelle 11,12 zu übermitteln. Dabei kann durch die erste Applikation insbesondere sichergestellt werden, dass die IP-Pakete, welche mittels der selektierten Netzwerkschnittstelle 11,12 an das IP-basierte Netzwerk 7 übermittelt werden, immer mit derselben Nummer als Quell-Port Nummer übertragen werden. Dementsprechend können IP-Pakete, welche mit derselben Nummer als Ziel-Port Nummer empfangen werden, durch die erste Applikation immer an die zweite Applikation übermittelt werden. Durch eine solche Ausgestaltung der Applikationen können Daten zwischen der zweiten Applikation und einem IP-basierten Netzwerk bidirektional übertragen werden, wobei durch die zweite Applikation eine Netzwerkschnittstelle 11,12 des ersten Kommunikationsknotens 1 für diese Übertragung selektiert werden kann.

In einem anderen Beispiel kann die erste Applikation Mittel umfassen, um die erwähnten Parameter über die Netzwerkschnittstellen 11,12 des ersten Kommunikationsknotens abzuspeichern. So kann die erste Applikation Mittel umfassen, um Merkmale über verfügbare Netzwerkschnittstellen 11,12 in einer Lookup-Tabelle abzuspeichern. Die zweite Applikation kann Daten über die lokale Kommunikationsverbindung 9 ohne weiteres an die erste Applikation übertragen, wobei auf der ersten Applikation Mittel vorgesehen sein können, um diese Daten insbesondere in Bezug auf die Lookup-Tabelle zu analysieren, wobei aufgrund einer solchen Analyse eine oder mehrere der Netzwerkschnittstellen 11,12 selektiert werden und die Daten durch die erste Applikation an eine oder mehrere Netzwerkschnittstellen 11,12 übertragen werden.

## Patentansprüche

1. Verfahren zur Übertragung von Datenpaketen, wobei auf mindestens einer von mehreren ersten drahtlosen Netzwerkschnittstellen (11,12) eines ersten Kommunikationsknotens (1,1') eine erste IP-Adresse für eine drahtlose bidirektionale Übertragung von Datenpaketen zwischen dem ersten Kommunikationsknoten und mindestens einem IP-basierten Netzwerk (7) konfiguriert wird, wobei eine von den mehreren ersten drahtlosen Netzwerkschnittstellen verschiedene zweite drahtlose lokale Netzwerkschnittstelle (10,10') des ersten Kommunikationsknotens (1,1') für eine bidirektionale Übertragung von Datenpaketen über eine lokale Kommunikationsverbindung (9) nur in Layer 2 und Layer 1 zwischen dem ersten Kommunikationsknoten (1,1') und einem zweiten Kommunikationsknoten (2,22) konfiguriert wird, wobei dem zweiten Kommunikationsknoten ein Identifikator zugeordnet wird, und wobei die erste IP-Adresse oder die erste IP-Adresse und eine Port-Nummer dem Identifikator zugeordnet abgespeichert wird, wobei die Datenpakete, welche über die lokale Kommunikationsverbindung (9) von dem zweiten Kommunikationsknoten (2,22) an den ersten Kommunikationsknoten (1,1') übertragen werden, vor der Übertragung an den ersten Kommunikationsknoten (1,1') mit einem von mehreren Kennzeichnungs-Tags markiert werden, wobei auf einem Load-Balancing-Modul des ersten Kommunikationsknotens (1,1') eine Tabelle mit den mehreren Kennzeichnungs-Tags und entsprechenden der mehreren ersten drahtlosen Netzwerkschnittstellen (11,12) abgespeichert wird und die Datenpakete aufgrund ihres Kennzeichnungs-Tags und der Tabelle von dem Load-Balancing Modul an die dem Kennzeichnungs-Tag tabellengemäß entsprechende der mehreren ersten drahtlosen Netzwerkschnittstellen (11,12) übermittelt werden.

2. Verfahren nach Anspruch 1, **dadurch gekennzeichnet, dass** Parameter der ersten drahtlosen Netzwerkschnittstellen (11,12) des ersten Kommunikationsknotens (1) und/oder Parameter des mindestens einen IP-basierten Netzwerks (7) über die lokale Kommunikationsverbindung (9) an den zweiten Kommunikationsknoten (2,22) übermittelt werden.

3. Verfahren nach einem der Ansprüche 1 bis 2, **dadurch gekennzeichnet, dass** als lokale Kommunikationsverbindung (9) eine Bluetooth-Verbindung und/oder eine IrDA-Verbindung erstellt wird.

4. Verfahren nach einem der Ansprüche 1 bis 3, **dadurch gekennzeichnet, dass** als mindestens eine erste drahtlose Netzwerkschnittstelle (11,12) des ersten Kommunikationsknotens (1,1') eine HSPA-basierte Netzwerkschnittstelle, eine UMTS-basierte Netzwerkschnittstelle, eine EDGE-basierte Netzwerkschnittstelle, eine GPRS-basierte Netzwerkschnittstelle und/oder eine WLAN-basierte Netzwerkschnittstelle verwendet wird.

5. System zur Übertragung von Datenpaketen, umfassend wenigstens einen ersten Kommunikationsknoten (1,1') mit einem Load-Balancing-Modul und wenigstens einen zweiten Kommunikationsknoten (2,22), wobei auf mindestens einer von mehreren ersten drahtlosen Netzwerkschnittstellen (11,12) des ersten Kommunikationsknotens (1,1') eine erste IP-Adresse für eine drahtlose bidirektionale Übertragung von Datenpaketen zwischen dem ersten Kommunikationsknoten und mindestens einem IP-basierten Netzwerk (7) konfiguriert ist, wobei eine von den mehreren ersten drahtlosen Netzwerkschnittstellen verschiedene zweite drahtlose lokale Netzwerkschnittstelle (10,10') des ersten Kommunikationsknotens (1,1') für eine bidirektionale Übertragung von Datenpaketen über eine drahtlose lokale Kommunikationsverbindung (9) nur in Layer 2 und Layer 1 zwischen dem ersten Kommunikationsknoten (1,1') und dem zweiten Kommunikationsknoten (2,22) konfiguriert ist, wobei dem zweiten Kommunikationsknoten ein Identifikator zugeordnet ist und wobei die erste IP-Adresse oder die erste IP-Adresse und eine Port-Nummer dem Identifikator zugeordnet abgespeichert ist, wobei der zweite Kommunikationsknoten ausgebildet ist, die Datenpakete, welche über die lokale Kommunikationsverbindung (9) von dem zweiten Kommunikationsknoten (2,22) an den ersten Kommunikationsknoten (1,1') zu übertragen sind, vor der Übertragung an den ersten Kommunikationsknoten (1,1') mit einem von mehreren Kennzeichnungs-Tags zu markieren, wobei das Load-Balancing-Modul ausgebildet ist, eine Tabelle mit den mehreren Kennzeichnungs-Tags und entsprechenden der mehreren ersten drahtlosen Netzwerkschnittstellen (11,12) abzuspeichern und die Datenpakete aufgrund ihres Kennzeichnungs-Tags und der Tabelle an die dem Kennzeichnungs-Tag tabellengemäß entsprechende der mehreren ersten drahtlosen Netzwerkschnittstellen (11,12) zu übermitteln.

6. System nach Anspruch 5, **dadurch gekennzeichnet, dass** der erste Kommunikationsknoten (1,1') ausgebildet ist, Parameter der ersten drahtlosen Netzwerkschnittstellen (11,12) des ersten Kommunikationsknotens (1) und/oder Parameter des mindestens einen IP-basierten Netzwerks (7) über die lokale Kommunikationsverbindung (9) an den zweiten Kommunikationsknoten (2,22) zu übermitteln.

7. System nach einem der Ansprüche 5 bis 6, **dadurch gekennzeichnet, dass** die lokale Kommunikationsverbindung (9) eine Bluetooth-Verbindung und/oder eine IrDA-Verbindung ist.

8. System nach einem der Ansprüche 5 bis 7, **dadurch gekennzeichnet, dass** als mindestens eine erste drahtlose Netzwerkschnittstelle (11,12) des ersten Kommunikationsknotens (1,1') eine HSPA-basierte Netzwerkschnittstelle, eine UMTS-basierte Netzwerkschnittstelle, eine EDGE-basierte Netzwerkschnittstelle, eine GPRS-basierte Netzwerkschnittstelle und/oder eine WLAN-basierte Netzwerkschnittstelle verwendbar ist.

## Claims

1. Method for transmission of data packets, a first IP address being configured on at least one of a plurality of first wireless network interfaces (11,12) of a first communication node (1,1'), for a wireless bidirectional transmission of data packets between the first communication node and at least one IP-based network (7), whereby a second wireless local network interface (10,10'), different from the plurality of first wireless network interfaces, of the first communication node (1,1'), is configured for a bidirectional transmission of data packets via a local communication link (9) only in layer 2 and layer 1 between the first communication node (1,1') and a second communication node (2,22), whereby assigned to the second communication node is an identifier, and whereby the first IP address or the first IP address and a port number is stored in a way assigned to the identifier, whereby the data packets which are transmitted via the local communication link (9) from the second communication node (2,22) to the first communication node (1,1') are marked by a plurality of identifying tags, before the transmission to the first communication node (1,1'), whereby stored on a load-balancing module of the first communication node (1,1') is a table with the plurality of identifying tags and corresponding ones of the plurality of first wireless network interfaces (11,12), and the data packets, based on their identifying tag and the table, are transmitted by means of the load-balancing module to the one of the plurality of first wireless network interfaces (11,12) corresponding to the identifying tag, according to the table.

2. Method according to claim 1, **characterized in that** parameters of the first wireless network interfaces (11,12) of the first communication node (1) and/or parameters of the at least one IP-based network (7) are transmitted via the local communication link (9) to the second communication node (2,22),

3. Method according to one of the claims 1 to 2, **characterized in that** a Bluetooth connection and/or an IrDA connection is set up as the local communication link (9).

4. Method according to one of the claims 1 to 3, **characterized in that** used as the at least one first wireless network interface (11,12) of the first communication node (1,1') is an HSPA-based network interface, a UMTS-based network interface, an EDGE-based network interface, a GPRS-based network interface and/or a WLAN-based network interface.

5. System for transmission of data packets, comprising at least one first communication node (1,1') with a load-balancing module and at least one second communication node (2,22), whereby configured on at least one of a plurality of first wireless network interfaces (11,12) of the first communication node is a first IP address for a wireless bidirectional transmission of data packets between the first communication node and at least one IP-based network (7), whereby a second wireless local network interface (10,10'), different from the plurality of first wireless network interfaces, of the first communication node (1,1') is configured for a bidirectional transmission of data packets via a wireless local communication link (9) only in layer 2 and layer 1 between the first communication node (1,1') and the second communication node (2,22), whereby an identifier is assigned to the second communication node and whereby the first IP address or the first IP address and a port number is stored in a way assigned to the identifier, whereby the second communication node is designed to mark the data packets which are to be transmitted via the local communication link (9) from the second communication node (2,22) to the first communication node (1,1'), before the transmission to the first communication node (1,1'), with one of a plurality of identifying tags, whereby the load-balancing module is designed to store a table with the plurality of identifying tags and the corresponding of the plurality of first wireless network interfaces (11,12) and to transmit the data packets based on their identifying tag and the table to the corresponding of the plurality of first wireless network interfaces (11,12), according to the table.

6. System according to claim 5, **characterized in that** the first communication node (1,1') is designed to transmit parameters of the first wireless network interfaces (11,12) of the first communication node (1) and/or parameters of the at least one IP-based network (7) via the local communication link (9) to the second communication node (2,22).

7. System according to one of the claims 5 to 6, **characterized in that** a Bluetooth connection and/or an IrDA connection is able to be set up as the local communication link (9).

8. System according to one of the claims 5 to 7, **characterized in that** able to be used as the at least one first wireless network interface (11,12) of the first communication node (1,1') is an HSPA-based network interface, a UMTS-based network interface, an EDGE-based network interface, a GPRS-based network interface and/or a WLAN-based network interface.

## Revendications

1. Procédé pour la transmission de paquets de données dans lequel une première adresse IP est configurée sur au moins une parmi une pluralité de premières interfaces réseau sans fil (11, 12) d'un premier nœud de communication (1, 1'), pour une transmission bidirectionnelle sans fil de paquets de données entre le premier nœud de communication et au moins un réseau basé sur le protocole IP (7), selon lequel une deuxième interface de réseau local sans fil (10, 10') du premier nœud de communication (1, 1'), différente de la pluralité de premières interfaces réseau sans fil, est configurée pouvoir transmettre de façon bidirectionnelle des paquets de données via une liaison de communication locale (9) seulement via la couche 2 et la couche 1 OSI entre le premier nœud de communication (1, 1') et un deuxième nœud de communication (2, 22), un identifiant étant assigné au deuxième nœud de communication (2, 22), ou la première adresse IP et un numéro de port étant sauvegardés en relation avec l'identifiant assigné, les paquets de données qui sont transmis via la liaison de communication locale (9) du deuxième nœud de communication (2, 22) au premier nœud de communication (1, 1') étant marqués par une pluralité d'étiquettes d'identification avant leur transmission au premier nœud de communication (1, 1'), un tableau contenant la pluralité d'étiquettes d'identification et les correspondances de la pluralité de premières interfaces réseau sans fil (11, 12) étant sauvegardées sur un module à équilibrage de charge du premier nœud de communication (1, 1'), et les paquets de données étant transmis, en fonction de leur étiquette d'identification, via le module à équilibrage de charge à une parmi la pluralité d'interfaces réseau sans fil (11, 12) correspondant à l'étiquette d'identification selon les données de correspondance fournies par le tableau.

2. Procédé selon la revendication 1, **caractérisé en ce que** des paramètres des premières interfaces de réseau sans fil (11, 12) du premier nœud de communication (1) et/ou des paramètres d'au moins un réseau basé sur le protocole IP (7) sont transmis via la liaison de communication locale (9) au deuxième nœud de communication (2, 22).

3. Procédé selon l'une des revendications 1 à 2, **caractérisé en ce qu'**une connexion Bluetooth et/ou une connexion IrDA est configurée comme liaison de communication locale (9).

4. Procédé selon l'une des revendications 1 à 3, **caractérisé en ce qu'**une interface réseau basée sur la technologie HSPA, une interface réseau basée sur la technologie UMTS, une interface réseau basée sur la technologie EDGE, une interface réseau basée sur la technologie GPRS et/ou WLAN est utilisée en tant qu'au moins première interface réseau sans fil (11, 12) du premier nœud de communication (1, 1').

5. Système pour la transmission de paquets de données, comprenant au moins un premier nœud de communication (1, 1') équipé d'un module à équilibrage de charge et au moins un deuxième nœud de communication (2, 22), dans lequel une première adresse IP est configurée sur au moins une choisie parmi une pluralité d'interfaces réseau sans fil (11, 12) du premier nœud de communication afin de transmettre de façon bidirectionnelle et sans fil des paquets de données entre le premier nœud de communication et au moins un réseau basé sur le protocole IP (7), dans lequel une deuxième interface de réseau local sans fil (10, 10'), différente de la pluralité de premières interfaces réseau sans fil, du premier nœud de communication (1, 1') est configuré pour une transmission bidirectionnelle des paquets de données via une liaison de communication locale sans fil (9) seulement via la couche 2 et la couche 1 OSI entre le premier nœud de communication (1, 1') et le deuxième nœud de communication (2, 22), un identifiant étant assigné au deuxième nœud de communication, et la première adresse IP ou la première adresse IP et un numéro de port étant sauvegardés en relation avec l'identifiant assigné, le deuxième nœud de communication étant agencé pour marquer les paquets de données qui doivent être transmis via la liaison de communication locale (9) du deuxième nœud de communication (2, 22) au premier nœud de communication (1, 1') d'une étiquette parmi une pluralité d'étiquettes d'identification avant leur transmission au premier nœud de communication (1, 1'), le module à équilibrage de charge étant conçu pour sauvegarder un tableau avec la pluralité d'étiquettes d'identification et la pluralité de premières interfaces réseau sans fil (11, 12) correspondantes, et pour transmettre les paquets de données en fonction de leur étiquette d'identification à l'interface réseau sans fil parmi la pluralité de premières interfaces réseau sans fil (11, 12), selon les données de correspondance fournies par le tableau.

6. Système selon la revendication 5, **caractérisé en ce que** le premier nœud de communication (1, 1') est conçu pour transmettre des paramètres des premières interfaces réseau sans fil (11, 12) du premier nœud de communication (1) et/ou des paramètres du au moins un réseau basé sur le protocole IP (7) via la liaison de communication locale (9) au deuxième nœud de communication (2, 22).

7. Système selon l'une des revendications 5 à 6, **caractérisé en ce qu'**une connexion Bluetooth et/ou une connexion IrDA peut être configurée en tant que liaison de communication locale (9).

8. Système selon l'une des revendications 5 à 7, **caractérisé en ce qu'**une interface réseau basé sur la technologie HSPA, une interface réseau basé sur la technologie UMTS, une interface réseau basé sur la technologie EDGE, une interface réseau basée sur la technologie GPRS et/ou WLAN peut être utilisée comme ladite au moins première interface réseau sans fil (11, 12) du premier nœud de communication (1, 1').
